## Europäisches Patentamt

(19) **European Patent Office**

**Office européen des brevets**

(11) Publication number: **0 117 101**
**B1**

(12) **EUROPEAN PATENT SPECIFICATION**

(45) Date of publication of patent specification: **03.12.86**

(51) Int. Cl.⁴: **B 62 B 9/12**

(21) Application number: **84300831.9**

(22) Date of filing: **09.02.84**

(54) **Bed for baby carriages.**

(30) Priority: **14.02.83 JP 23373/83**

(43) Date of publication of application:
**29.08.84 Bulletin 84/35**

(45) Publication of the grant of the patent:
**03.12.86 Bulletin 86/49**

(84) Designated Contracting States:
**DE FR GB IT**

(56) References cited:
**FR-A-2 295 864**
**GB-A- 23 455**
**GB-A- 444 084**
**GB-A-1 126 920**
**US-A-2 872 203**
**US-A-3 330 575**

(73) Proprietor: **APRICA KASSAI KABUSHIKIKAISHA**
**16-1 Higashishimizu-machi, Minami-ku**
**Osaka-shi (JP)**

(72) Inventor: **Kassai, Kenzou**
**16-1 Higashishimizu-machi Minami-ku**
**Osaka-shi Osaka-fu (JP)**

(74) Representative: **Wright, Peter David John et al**
**R.G.C. Jenkins & Co. 12-15, Fetter Lane**
**London EC4A 1PL (GB)**

Courier Press, Leamington Spa, England.

# Description

This invention relates to a bed for baby carriages and particularly it relates to a bed for baby carriages which is collapsible, wherein its baby-supporting portion may take the form of a bed or may take the form of a chair when desired.

Originally or at least when the baby carriage was first proposed, it was of the so-called "box type" in which a baby is comfortably laid in the baby carriage. For babies the box type is preferable from the standpoint of their growth and is superior in baby carriage comfort. However, the change of times has gradually taken the edge off such a baby-centered design concept and placed more importance on the convenience of baby carriages as a means for conveying babies. For example, the chair type has predominated in baby carriages and, further, because of the use of means of transport, collapsible small-sized baby carriages are most popular. This is an inevitable consequence of various changes in life style and is one of the needs of the times.

The pursuit of the convenience of baby carriages as a means for conveying babies, as described above, cannot be denied to be an important point in developing a new baby carriage. However, it seems necessary to go back to the starting point to think over what construction a baby carriage should have which does not hamper baby growth or degrade baby carriage comfort and which is convenient to use.

GB—A—23455/1911 shows a baby carriage having a bed in which an end wall and the adjoining portion of the bottom wall can rotate downwards to open the end of the bed so that it can be used as a chair. The bed has side walls, but these do not extend continuously for the whole length of the sides. Instead, the portion of the bed which rotates downwards has independent and separate side walls from the remainder of the bed. The parts which rotate downwards move as a single unit and do not themselves fold or deform and do not move relative to one another. The parts which rotate downwards are supported by the forward ends of frame members which are hinged to the frame of the remainder of the bed.

GB—A—1126920 shows a baby carriage having a bed with continuous and flexible side walls and a rigid frame extending around its rim, i.e. along the upper sides of the side and end walls. This rim does not bend or rotate in part, but the bed is nevertheless convertible into a chair by rotating sections of the bottom wall upward to form a zig-zag structure, the whole bed then being rotated so that the zig-zag structure provides a chair seat and back. The raising of parts of the bottom wall causes lower parts of the side walls to fold, but the rigid frame remains the same shape and the upper sides of the side and end walls remain attached to it and in the same relative positions.

According to the present invention there is provided a bed for a baby carriage having a bottom wall, a front wall and left and right side walls, the bed having a front portion, comprising the front wall and forward parts of the bottom wall and of the left and right walls, and a rear portion comprising the remainder of the bottom and side walls, the front portion having left and right frame members for supporting the said forward parts of the left and right side walls, the left and right frame members being turnably supported at their rear ends about a transverse axis and the bottom wall being foldable about the boundary between its forward part and its remainder so that the said frame members and the forward part of the bottom wall are rotatable with respect to the rear portion of the bed, downward rotation of the frame members and the forward part of the bottom wall effecting lowering of the front of the bed so that it can be used as a chair, characterised in that

the said forward parts of the side walls are flexible and are joined to the respective remainders of the side walls, and at least one of the said front wall and the forward part of the bottom wall is flexible and folds during the said downward rotation which opens the front of the bed, the said forward parts of the side walls also folding during the said downward rotation.

Preferably the bed has means for retaining the said frame members in a substantially horizontal position with the front end of the bed not opened.

In one embodiment the said means for retaining the said frame members comprises a pair of prop links each in the form of two links foldably connected together, said prop links being turnably connected at one of their respective ends to the said frame members and at the other ends being turnably connected in use to the baby carriage body.

In another embodiment the said means for retaining the said frame members comprises a pair of draw links longitudinally slidably installed along respective sides of the underside of the bottom wall, and linkage means for turning the said frame members as the said draw links slide.

It is possible to provide a bed embodying the present invention which may be changed from the basic bed form into the chair form without needing addition of separately prepared new members or removal of any of the members initially provided as part of the bed, it being necessary only to displace some of the members provided in the bed while they are connected to the others. That is, simply turning the upper side frames downwardly causes the portions directly or indirectly held by said upper side frames to change shape to open the front of the bed so as to enable the bed to be used as a chair. This helps to reduce risks of losing parts, which is liable to happen if separable members are provided.

Embodiments of the present invention, given by way of non-limitative example, will now be described with reference to the accompanying drawings, in which:

Figure 1 is a perspective view of an embodiment of the present invention, shown in its bed form;

Figure 2 shows a state in which the baby carriage bed 1 of Figure 1 is changed to chair form;

Figure 3 is a side view showing the baby carriage bed 1 of Figure 1 attached to a baby carriage;

Figure 4 shows a state in which the bed of Figure 3 is changed to chair form;

Figure 5 is a side view of a baby carriage having another embodiment of the present invention attached thereto, with the bed 1 being shown in its bed form;

Figure 6 shows the baby carriage of Figure 5 with the bed 1 changed to chair form;

Figure 7 shows an arrangement associated with draw links 18 in Figures 5 and 6;

Figure 8 shows a state in which a hood 15 of the baby carriage is positioned to face in an opposite direction to that shown in Figure 5;

Figure 9 is a side view of a baby carriage having yet another embodiment of this invention attached thereto, with the bed 1 being shown in its bed form;

Figure 10 shows a state in which the bed of Figure 9 is changed to chair form;

Figure 11 is a side view showing the front of a still further embodiment of this invention, with the bed being shown in its bed form; and

Figure 12 shows a state in which the baby carriage bed of Figure 11 is changed to chair form.

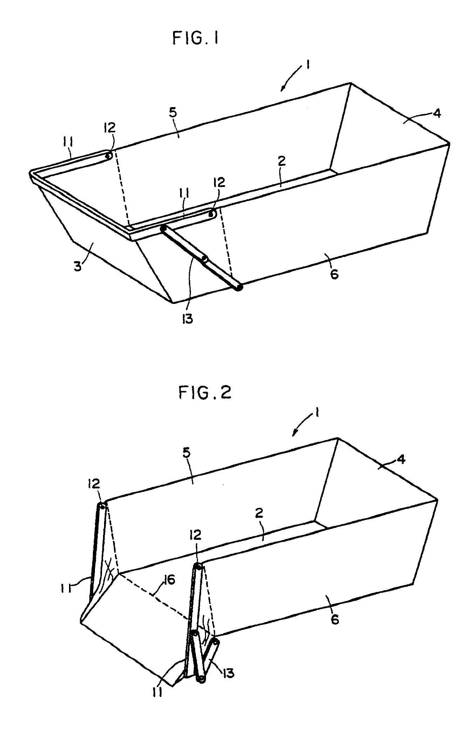

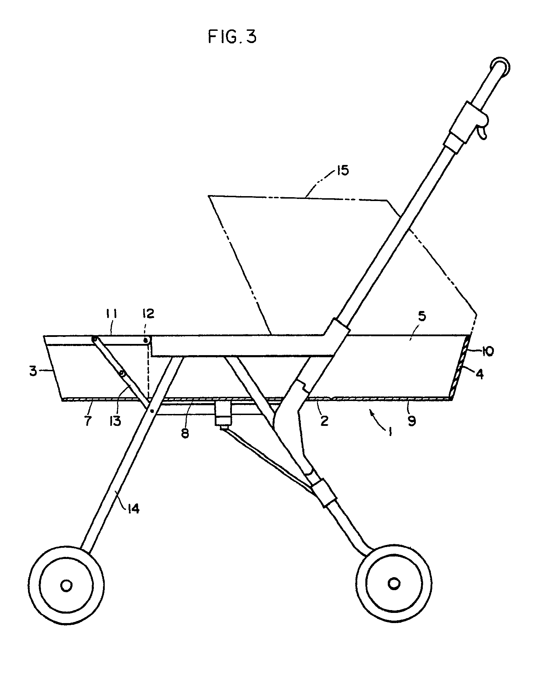

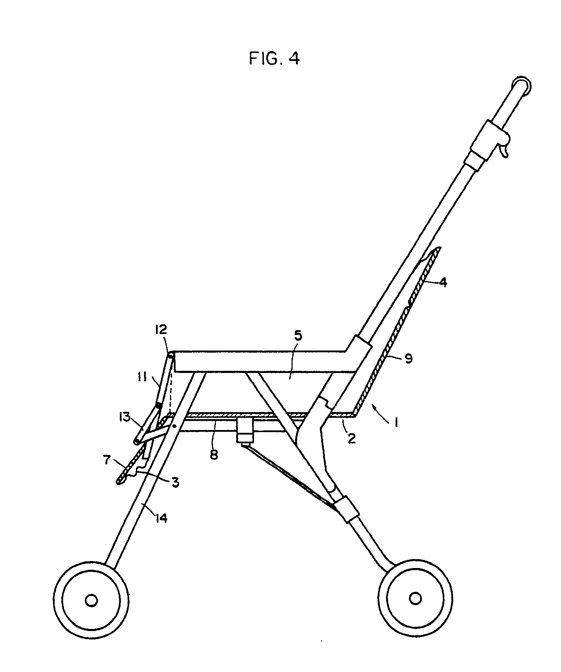

Figure 1 is a perspective view of an embodiment of this invention, shown in the bed form. Figure 2 shows a state in which the baby carriage bed of Figure 1 is changed to chair form. Figure 3 is a right-hand side view showing the baby carriage bed of Figure 1 attached to a baby carriage. Figure 4 shows a state in which the bed of Figure 3 is changed to chair form.

As shown in Figure 1, the baby carriage bed 1 is in the form of a unitary box as a whole comprising a bottom wall 2, a front wall 3, a back wall 4, and left-hand and right-hand side walls 5 and 6. These walls 2 through 6 are made of suitable cloth or the like, and in some portions the flexibility of the cloth or the like is utilized while in other portions a hard core material is incorporated to provide suitable strength or stiffness.

In Figures 3 and 4, the bed is shown with its right-hand side wall 6 removed. As can be seen for example from Figure 3, the bottom wall 2 and back wall 4 have hard cores incorporated therein. The bottom wall 2 has separate cores incorporated in the front and rear portions. That is, the front portion of the bottom wall 2 has a front core 7 incorporated therein. In the illustrated embodiment, the rear portion of the bottom wall 2 is divided into two regions, forward and backward, and the forward half portion has a rear forward half core 8 incorporated therein and the backward half portion has a rear backward half core 9 incorporated therein. The back wall 4 has a back core 10 incorporated therein. The incorporation of separate cores in this manner enables the boundary lines between the individual cores to be folding.

A pair of upper side frames 11 are provided along the upper sides of the front portions of the left-hand and right-hand side walls 5 and 6 to suspend said front portions. In the illustrated embodiment, as best shown in Figure 1, the pair of upper side frames 11 are formed of a single member which is U-shaped as a whole. Each of the upper side frames 11 is turnably supported at its rear end by a transverse shaft 12, as shown for example in Figure 3.

The left-hand and right-hand side walls 5 and 6 have no hard cores incorporated therein; therefore, at least the front portion of the left-hand and right-hand side walls 5 and 6 (the portions to the left of the boundary lines each shown in dotted line in Figure 1) are foldable.

Means for retaining the horizontal position of the upper side frames 11 is provided, comprising a pair of prop links 13 each in the form of two links foldably connected together. Each prop link 13 is turnably connected at one end thereof to the associated upper side frame 11 and at the other end to the baby carriage body, for example, the associated front leg 14 of the baby carriage.

In the state shown in Figures 1 and 3, the bed 1 is shown in its original bed form. In this state, the prop links 13 extend straight, holding the upper side frames 11 in their horizontal position. In the bottom wall 2, the cores 7, 8 and 9 define a substantially horizontal plane. In this state, a hood 15 may be installed, as shown in phantom lines in Figure 3.

When it is desired to change the bed 1 from the aforesaid bed form into the chair form, this can be attained by folding the prop links 13. To make it possible to fold the prop links 13· only when necessary, the links 13 have only to be provided with means for locking them in the straightened state. In response to the folding of the prop links 13, the upper side frames 11 are downwardly turned around the axes of the shafts 12. In response to this turning movement, the front wall 3 is downwardly displaced and the front portions of the left-hand and right-hand side walls 5 and 6 are bent while the front portion of the bottom wall 2 is folded relative to the rear portion thereof along the folding line 16. Finally, the front wall 3 is turned over to the extent that it is positioned under the front portion of the bottom wall 2, with the front portion of the left-hand and right-hand side walls 5 and 6 being complexly bent. As a result, the front of the bed 1 is opened to enable the bed to be used as a chair. That is, the baby is allowed to project his legs through the front of the bed. At this time, the front portion of the bottom wall 2 extends along the undersides of the legs and function to protect the legs.

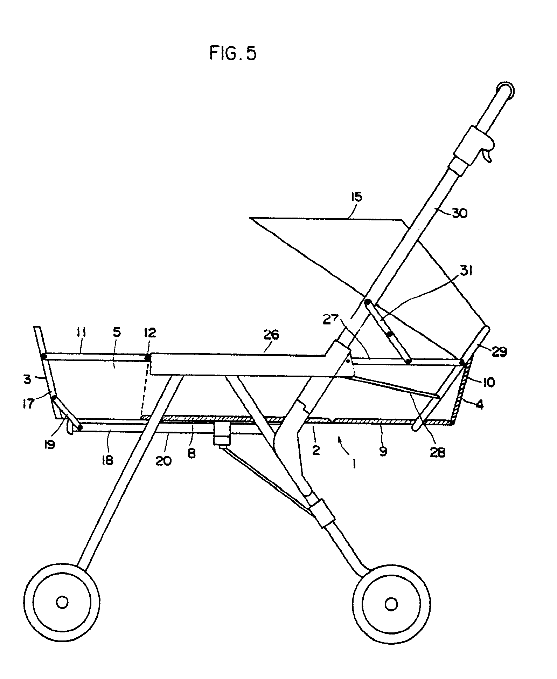

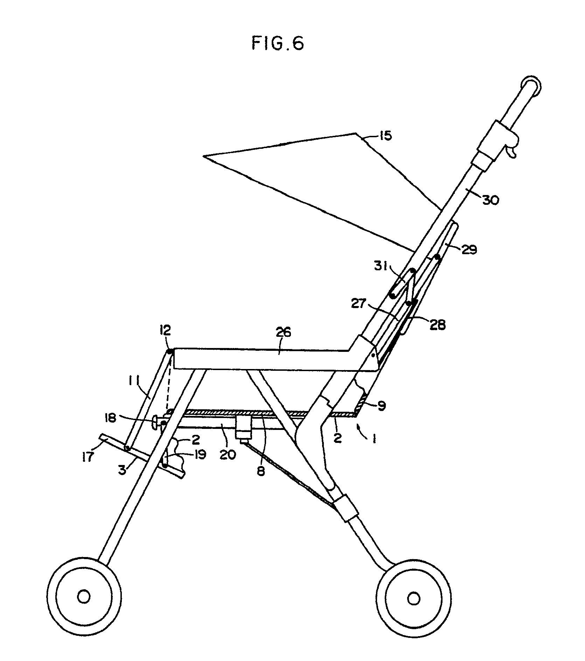

In addition, as shown in Figure 4, when the bed 1 is changed to chair form, the backward half region of the rear portion of the bottom wall 2 may be utilized to form a backrest. In this embodiment, the shape of the bed is changed so that the portion having the rear backward core 9 incorporated therein is raised and the back wall 4 is substantially aligned with said portion. As for a mechanism for this change of shape, a mechanism shown in Figures 5 and 6 to be later described may be utilized.

To restore the bed 1 to its original bed form, the user raises the upper side frames 11 by one hand while correcting the shape of the front portion of the bed 1 by the other hand. When the upper side frames 11 are brought into their horizontal position, the prop links 13 will be suitably locked in position.

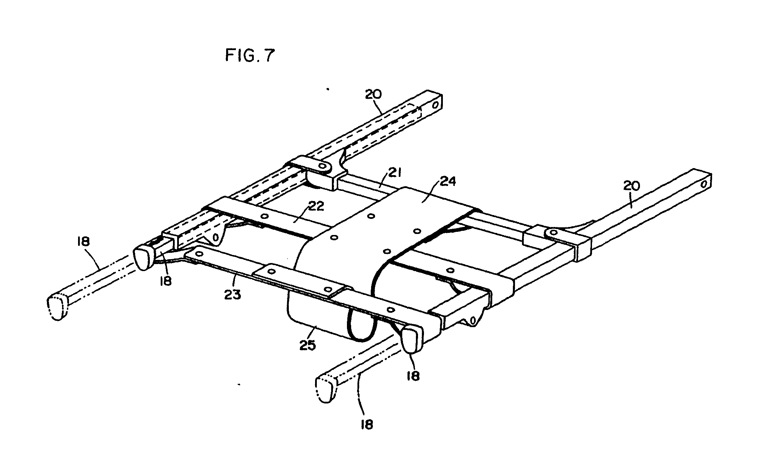

Figure 5 is a side view of a baby carriage having another embodiment of the invention attached thereto, with the bed 1 shown in its original bed form. Figure 6 shows a state in which the bed 1 of Figure 5 is changed to chair form. Figure 7 shows an arrangement associated with draw links shown in Figures 5 and 6.

In Figures 5 and 6, the bed 1 is shown with its right-hand side wall 6 removed. As compared with the preceding embodiment, the front portion of the bottom wall 2 has no core incorporated therein, so that the bed is foldable in this portion. Further, as compared with the preceding embodiment, the means for retaining the horizontal position of the upper side frames 11 differs. This means includes a pair of front links 17 turnably connected to the front ends of the upper side frames 11 and extending along the front sides of the left-hand and right-hand side walls 5 and 6. The pair of upper side frames 11 are formed of separate members and, though not shown in detail, the front links 17 have a widthwise extending portion to serve as means for determining the distance between the upper side frames 11. There are provided a pair of draw links 18 positioned on opposite sides of the lower surface of the bottom wall 2 and slidably extending in the direction of the length of the bed. The arrangement associated with the draw links 18 will be later described with reference to Figure 7. A pair of connecting links 19 are connected between the front links 17 and the draw links 18.

Referring to Figure 7, the pair of draw links 18 are inserted in a pair of longitudinally extending tube members 20 installed on the baby carriage body and are thereby slidably held. A widthwise connecting bar 21 and a first widthwise connecting belt 22 are connected between the pair of tube members 20. Further, a second widthwise connecting belt 23 is connected between the front ends of the pair of draw links 18. In addition, in Figure 7, the connecting links 19 to be connected to the draw links 18 are omitted from illustration. A wide belt 24 is installed intermediate between the tube members 20 to extend parallel to the tube members 20 so as to connect the widthwise connecting bar 21 and the first and second widthwise connecting belts 22 and 23. The widthwise connecting bar 21, widthwise connecting belts 22 and 23, and wide belt 24 contact the lower surface of the bottom wall 2 of the bed 1 to function to support the bottom wall 2. The state shown in solid lines in Figure 7 is one in which the draw links 18 are in their rearmost end position, with a slack 25 being formed in the wide belt 24. When the draw links 18 are forwardly drawn as shown in phantom lines, the slack 25 disappears and the terminal end of the forward withdrawal of the draw links 18 is defined.

Referring to Figure 5, the bed 1 is in its original bed form. In this state, the draw links 18 have been drawn to the foremost position, with the upper side frames 11 being maintained substantially horizontal by the connecting links 19 and front links 17.

When it is desired to change the bed 1 into chair form as shown in Figure 6, the draw links 18 will be rearwardly slid. In response thereto, the front portion of the bottom wall 2 produces a slack to allow the front wall 3 to displace downwardly. The upper side frames 11 are downwardly turned and, as shown in Figure 6, the front of the bed 1 is opened to enable the bed to be used as a chair.

Further, Figures 5 and 6 show an example of a construction for causing the portion of the bottom wall 2 having the rear backward half core 9 incorporated therein to rise to serve as a backrest. Main levers 27 are turnably supported at the rear ends of armrests 26 which form part of the baby carriage body. Disposed below the main levers 27 are auxiliary levers 28 turnably supported at the rear ends of the armrests 26. Bed rear portion support members 29 are held by the main and auxiliary levers 27 and 28 and support the rear portion of the bed 1 directly. Reclining adjustment links 31 are connected between the main levers 27 and the pusher rods 30 of the baby carriage, so that the inclined state of the main levers 27 can be changed by changing the bent state of the reclining adjustment links 31. When the main levers 27 are horizontal as shown in Figure 5, the portion of the bottom wall 2 in the rear portion of the bed 1 supported by the bed rear portion support members 29 is also maintained horizontal, providing the original bed form. As shown in Figure 6, when the main levers 27 are raised, the bed rear portion support members 29 are upwardly displaced and the rear wall 4 is raised and so is the portion of the bottom wall 2 having the rear backward half core 9 incorporated therein. As a result, the portion containing the rear backward half core 9 cooperates with the back wall 4 to define a backrest. The auxiliary levers 28 serve to control the attitude of the bed rear portion support members 29. For example, in the state of Figure 6, the bed rear portion support members 29 abut against the back of the bottom wall 2 to bring the back wall 4 with the portion containing the rear backward half core 9 into alignment with each other.

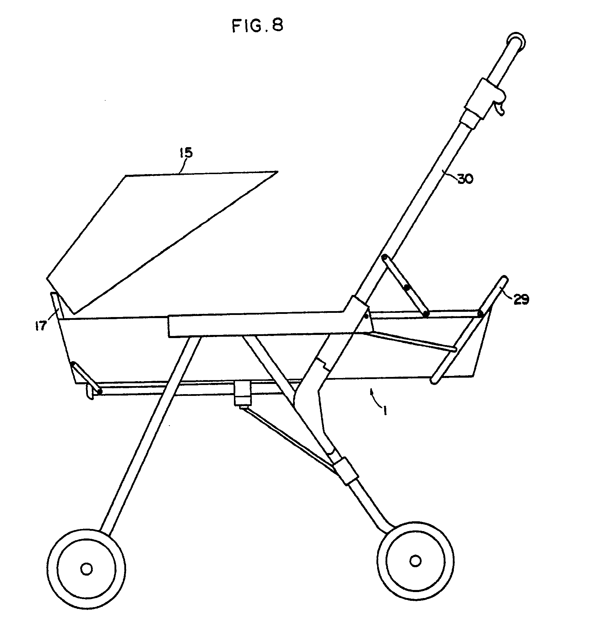

In Figure 5, the hood 15 is attached for example by utilizing the bed rear portion support members 29. If such hood 15 is arranged so that it can be attached to the baby carriage for example by utilizing the front links 17 as desired, as shown in Figure 8, then two modes of use can be obtained, one in which the user pushes the baby carriage face to face with the baby (Figure 8) and the other in which the user pushes it from behind the back of the baby (Figure 5).

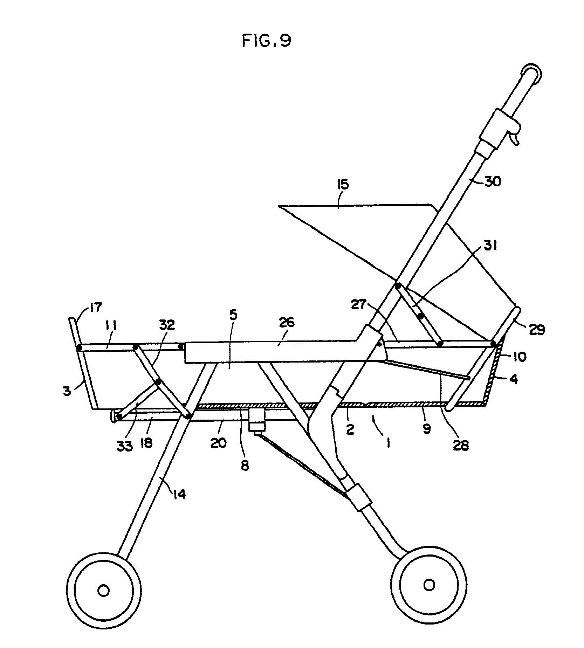

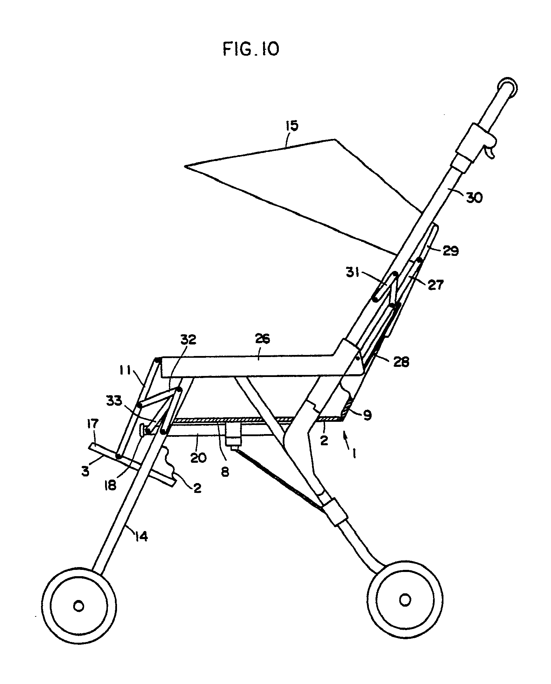

Figure 9 is a side view of a baby carriage having yet another embodiment of the invention attached thereto, with the bed 1 being shown in its original bed form. Figure 10 shows a state in which the bed 1 of Figure 9 is changed into chair form.

The embodiment shown in Figures 9 and 10 differs only in the following point from the embodiment described with reference to Figures 5 to 7; the means for retaining the horizontal position of the upper side frames 11 differs. While the draw links 18 are used without any change, the interlocking mechanism extending from the draw links 18 to the upper side frames 11 differs. In this embodiment, a pair of prop links 32 are used which are connected between the upper side frames 11 and the front legs 14. The prop links 32 are turnably connected at one of their respective ends to the upper side frames 11 and at the other ends to the front legs 14. A pair of support links 33 are connected between the foldable portions of the prop links 32 and the draw links 18. The prop links 32 are so designed that when the draw links 18 are forwardly drawn, the prop links 32 are pulled by the support links 33 until their foldable portions are positioned a little more forward than when the prop links 32 are straight. This arrangement ensures that when a load is applied to the front portion of the bed 1 which force provides a downward turning force on the upper side frames 11, so that the force tends to fold the prop links 32, this tends to pull the draw links 18 in the direction in which they slide forwardly. The forward withdrawal of the draw links 18 is limited by the wide belt 24 shown in Figure 7. If the folding direction of the prop links 32 was the other way, such a load would undesirably cause the links 18 to slide rearwardly. It is for the purpose of avoiding this undesirable situation that the prop links 32 are arranged a little forwardly folded when the draw links 18 are forwardly drawn.

Referring to Figure 10, when the draw links 18 are rearwardly slid, the prop links 32 are folded by the support links 33 to project upwardly. In response thereto, the upper side frames 11 are turned downwardly. Therefore, the front wall 3 is downwardly displaced and, while the front portions of the left-hand and right-hand side walls 5 and 6 are bent, the front portion of the bottom wall 2 is wrinkled to hang down. In this manner, the front of the bed 1 is opened to enable the bed to be used as a chair. The arrangement for forming the backrest is the same as that described in the preceding embodiment.

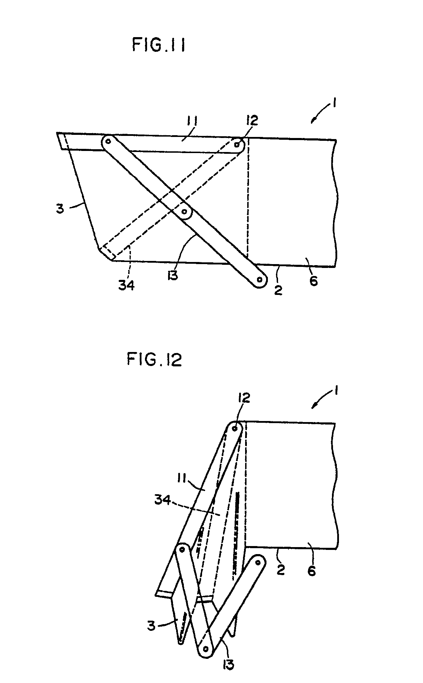

Figure 11 is a side view showing the front portion of still a further embodient of the invention, with the bed being shown in its original bed form. Figure 12 shows a state in which the baby carriage bed of Figure 11 is changed into chair form.

The embodiment shown in Figures 11 and 12 is similar to that shown in Figures 1 to 4. That is, upper side frames 11 of similar shape are provided in a similar manner. As a means for retaining the horizontal position of said upper side frames, similar prop links 13 are provided in a similar manner.

There are two differences in the arrangement. First, no core corresponding to the front core 7 is inserted in the front portion of the bottom wall 2, so that the front portion is left in the form of flexible cloth or the like. The second difference is that a reinforcing frame 34 is provided so that it is turnable around the axis of the shaft 12. The reinforcing frame 34, like the upper side frames 11, is formed of a member which is U-shaped as a whole, and its widthwise extending portion extends along the edge which is positioned at the intersection between the bottom and front walls 2 and 3. Such reinforcing frame 34 is preferably disposed inside the cloth or the like forming the bed 1.

In the state shown in Figure 11, the front portion of the bed 1 is properly shaped by the presence of the reinforcing frame 34 so that the shape of the front portion required for the original bed form is retained. On the other hand, when the upper side frames 11 are turned downwardly as shown in Figure 12, the reinforcing frame 34 is also downwardly turned, so that the front portions of the bottom wall 2 and left-hand and right-hand side walls 5 and 6 are suitably bent. As a result, the front of the bed 1 is opened to enable the bed to be used as a chair.

According to this embodiment, since the cloth or other flexible portion is divided into parts by the reinforcing frame 34, the degree of bending of those parts is less than when the whole is bent at the same time. The bed is easy to bend and hence it can be easily shaped into bed form. This is analogous to the situation that when an umbrella has a greater number of ribs, it is easier to handle the umbrella cloth when the umbrella is closed. Thus, some reinforcing frames may be provided to shorten the spacing.

In addition, the draw links 18 used in the embodiment represented by Figure 5 and the embodiment represented by Figure 9 may be used in the embodiment shown in Figure 3 or 1. In this case, the interlocking between the draw links 18 and for example the prop links 13 may be dispensed with and in the embodiment of Figure 3 the use of the draw links 18 makes it possible to remove the front core 7.

While the folding operation of the baby carriage has not been referred to in the above description, it is possible to provide a bed which satisfactorily follows the folding operation of the baby carriage by suitably designing the connections between the members forming the bed 1. Further, such bed can be applied both to foldable baby carriages and to baby carriages having no folding function.

**Claims**

1. A bed (1) for a baby carriage having a bottom wall (2), a front wall (3) and left and right side walls (5, 6), the bed having a front portion, comprising the front wall and forward parts of the bottom wall and of the left and right walls, and a rear portion comprising the remainder of the bottom and side walls, the front portion having left and right frame members (11) for supporting the said forward parts of the left and right side walls (5, 6), the left and right frame members (11) being turnably supported at their rear ends about a transverse axis and the bottom wall (2) being foldable about the boundary between its forward part and its remainder so that the said frame members (11) and the forward part of the bottom wall (2) are rotatable with respect to the rear portion of the bed, downward rotation of the frame members (11) and the forward part of the bottom wall (2) effecting lowering of the front of the bed so that it can be used as a chair,
    characterised in that
    the said forward parts of the side walls (5, 6) are flexible and are joined to the respective remainders of the side walls, and at least one of the said front wall (3) and the forward part of the bottom wall (2) is flexible and folds during the said downward rotation which opens the front of the bed, the said forward parts of the side walls (5, 6) also folding during the said downward rotation.

2. A bed according to claim 1 having means (13; 17, 18, 19; 18, 32, 33) for retaining the said frame members (11) in a substantially horizontal position with the front end of the bed not opened.

3. A bed according to claim 2 in which the said means for retaining the said frame members (11) comprises a pair of prop links (13) each in the form of two links foldably connected together, said prop links being turnably connected at one of their respective ends to the said frame members and at the other ends being turnably connected in use to the baby carriage body.

4. A bed according to claim 2 in which the said means for retaining the said frame members (11) comprises a pair of draw links (18) longitudinally slidably installed along respective sides of the underside of the bottom wall (2), and linkage means (17, 19; 18, 32, 33) for turning the said frame members (11) as the said draw links (18) slide.

5. A bed according to claim 4 in which the forward part of the bottom wall (2) is flexible and folds during the said downward rotation, and the said linkage means comprises a pair of front links (17) turnably connected to the front ends of the said frame members (11) and extending along the front ends of the said forward parts of the left and right side walls (5, 6) and a pair of connecting links (19) connected between said front links (17) and said draw links (18).

6. A bed according to claim 4 in which the said linkage means comprises a pair of prop links (32) each in the form of two links foldably connected together and turnably connected at one of their respective ends to the frame members (11) and at the other ends turnably connected in use to the baby carriage body, and a pair of support links (33) connected between the foldable portions of said prop links (32) and said draw links (18).

7. A bed according to claim 2 in which both the front wall (3) and the forward part of the bottom wall (2) are flexible and fold during the said downward rotation.

8. A bed according to any one of the preceding claims in which the said bottom wall (2) has separate hard cores (7, 8, 9) incorporated in its said front part and its said remainder.

9. A bed according to any one of the preceding claims in which a rearward portion of the said remainder of the bottom wall (2) is constructed so that it can be raised, whereby a backrest is defined.

**Patentansprüche**

1. Ein Bett (1) für einen Kinderwagen mit einer Bodenfläche (2), einem Fußende (3) und rechten und linken Seitenwänden (5, 6), wobei das Bett ein das Fußende und die Bodenflächenvorderteile sowie die Vorderteile der rechten und linken Wände enthaltendes vorderes Teil und ein die restlichen Teile der Bodenfläche und der Seitenwände enthaltendes rückwärtiges Teil aufweist, wobei das vordere Teil linke und rechte Rahmenteile (11) zum Stützen der Vorderteile der linken und rechten Seitenwände (5, 6) umfaßt, wobei die linken und rechten Rahmenteile (11) an ihren rückwärtigen Enden um eine Querachse umklappbar gelagert sind und die Bodenfläche (2) um die Trennlinie zwischen ihrem Vorderteil und ihrem restlichen Teil abgeknickt werden kann, so daß die Rahmenteile (11) und das Bodenflächenvorderteil (2) bezüglich des rückwärtigen Teils des Bettes gedreht werden können, wobei die nach unten gerichtete Drehung der Rahmenteile (11) und des Bodenflächenvorderteils (2) zu einem Senken des Fußendes des Bettes führen, so daß es als Sitz verwendet kann,
    dadurch gekennzeichnet,
    daß die Seitenwandvorderteile (5, 6) flexibel und mit den entsprechenden restlichen Teilen der Seitenwände verbunden sind, und wenigstens eines der Fußendenteile (3) und der Bodenflächenvorderteile (2) flexibel ist und sich während der nach unten gerichteten Drehung, durch die das Fußende des Bettes geöffnet wird, zusammenfaltet, wobei sich auch die Seitenwandvorderteile (5, 6) während der nach unten gerichteten Drehung zusammenfalten.

2. Ein Bett nach Anspruch 1 mit Vorrichtungen (13; 17, 18, 19; 18, 32, 33), um die Rahmenteile (11) in einer im wesentlichen horizontalen Lage bezüglich des nicht geöffneten Fußendes des Bettes zu halten.

3. Ein Bett nach Anspruch 2, worin die Vorrichtungen zum Halten der Rahmenteile (11) ein Paar Kippstreben (13), von denen jede die Form von zwei zusammenfaltbar verbundenen Verbindungsgliedern hat, wobei die Kippstreben an einem ihrer entsprechenden Enden umklappbar mit den Rahmenteilen und an den anderen Enden bei der Verwendung umkippbar mit dem Kinderwagenkörper verbunden sind, enthalten.

4. Ein Bett nach Anspruch 2, worin die Vorrichtungen zum Halten der Rahmenteile (11) ein Paar Zugstreben (18), die in Längsrichtung gleitbar entlang entsprechender Seiten der Unterseite der Bodenfläche (2) angebracht sind, und Gestängeteile (17, 19; 18, 32, 33) zum Umkippen der Rahmenteile (11) beim Gleiten der Zugstreben (18) enthalten.

5. Ein Bett nach Anspruch 4, worin das Bodenflächenvorderteil (2) flexibel ist und sich bei der nach unten gerichteten Drehung zusammenfaltet, und worin die Gestängeteile ein Paar Endstreben (17), die umkippbar mit den vorderen Enden der Rahmenteile (11) verbunden sind und sich entlang der vorderen Enden der Vorderteile der linken und rechten Seitenwände (5, 6) erstrecken, und ein Paar Verbindungsstreben (19), die zwischen den Endstreben (17) und den Zugstreben (18) liegen, enthalten.

6. Ein Bett nach Anspruch 4, worin die Gestängeteile ein Paar Kippstreben (32), von denen jede die Form von zwei zusammenfaltbar verbundenen Verbindungsgliedern hat, welche an einem ihrer entsprechenden Enden mit den Rahmenteilen (11) und an den anderen Enden bei der Verwendung umkippbar mit dem Kinderwagenkörper verbunden sind, und ein Paar Stützstreben (33), die zwischen den zusammenfaltbaren Teilen der Kippstreben (32) und den Zugstreben (18) liegen, enthalten.

7. Ein Bett nach Anspruch 2, worin sowohl das Fußende (3) als auch das Bodenflächenvorderteil (2) flexibel sind und sich während der nach unten gerichteten Drehung zusammenfalten.

8. Ein Bett nach einem der vorhergehenden Ansprüche, worin die Bodenfläche (2) einzelne feste Kernteile (7, 8, 9), die ihren vorderen Teil und ihren verbleibenden Teil eingearbeitet sind, enthält.

9. Ein Bett nach einem der vorhergehenden Ansprüche, worin der rückwärtige Teil der verbleibenden Teile der Bodenfläche (2) so konstruiert ist, daß er aufgerichtet werden kann, wodurch eine Rückenstütze entsteht.

**Revendications**

1. Nacelle (1) pour poussette de bébé comprenant une paroi de fond (2), une paroi avant (3) et des parois latérales de gauche et de droite (5, 6), la nacelle comportant une partie avant comprenant la paroi avant et des parties avant de la paroi de fond et des parois de gauche et de droite, et une partie arrière comportant le reste des parois de fond et latérales, la partie avant comprenant des éléments de cadre de gauche et de droite (11) pour supporter lesdites parties avant des parois latérales de gauche et de droite (5, 6), les éléments de cadre de gauche et de droite (11) étant supportés de façon rotative à leurs extrémités arrière autour d'un axe transversal, et la paroi de fond (2) pouvant être pliée autour de la limite entre sa partie avant et le reste de manière que lesdits éléments de cadre (11) et la partie avant de la paroi de fond (2) puissent tourner par rapport à la partie arrière de la nacelle, la rotation vers le bas des éléments de cadre (11) et de la partie avant de la paroi de fond (2) déterminant l'abaissement de lavant de la nacelle de manière qu'elle puisse être utilisée en tant que siège,

caractérisée en ce que lesdites parties avant des parois latérales (5, 6) sont flexibles et sont reliées aux parties respectives restantes des parois latérales, et l'une au moins de ladite paroi avant (3) et de ladite partie avant de la paroi de fond (2) est flexible et se plie pendant ladite rotation vers le bas qui ouvre l'avant de la nacelle, lesdites parties avant des parois latérales (5, 6) se pliant également pendant ladite rotation vers le bas.

2. Nacelle selon la revendication 1, comprenant des moyens (13; 17, 18, 19; 18, 32, 33) pour retenir lesdits éléments de cadre (11) dans une position sensiblement horizontale lorsque l'extrémité avant de la nacelle n'est pas ouverte.

3. Nacelle selon la revendication 2, dans laquelle lesdits moyens pour retenir lesdits éléments de cadre (11) comprennent une paire de biellettes de soutien (13) ayant chacune la forme de deux biellettes reliées l'une à l'autre de manière à pouvoir être pliées, lesdites biellettes de soutien pouvant être reliées de façon rotative à l'une de leurs extrémités respectives auxdits éléments de cadre et pouvant être reliées de façon rotative à leurs autres extrémités au corps de la poussette de bébé lorsqu'on utilise.

4. Nacelle selon la revendication 2, dans laquelle lesdits moyens pour retenir lesdits éléments de cadre (11) comprennent une paire de tirants (18) installés de façon à coulisser longitudinalement le long des côtés respectifs du côté inférieur de la paroi de fond (2), et des moyens de liaison (17, 19; 18, 32, 33) pour faire tourner lesdits éléments de cadre (11) quand lesdits tirants (18) coulissent.

5. Nacelle selon la revendication 4, dans laquelle la partie avant de la paroi de fond (2) est flexible et se plie pendant ladite rotation vers le bas, et lesdits moyens de liaison comprennent une paire de biellettes avant (17) reliées de façon rotative aux extrémités avant desdits éléments de cadre (11) et s'étendant le long des extrémités avant desdites parties avant des parois latérales de gauche et de droite (5, 6), et une paire de biellettes de liaison (19) reliées entre lesdites biellettes avant (17) et lesdits tirants (18).

6. Nacelle selon la revendication 4, dans laquelle lesdits moyens de liaison comprend une paire de biellettes de soutien (32) ayant chacune la forme de deux biellettes reliées ensemble de façon pliable et reliées de façon rotative à l'une de leurs extrémités respectives aux éléments de cadre (11) et reliées de façon rotative à leurs autres extrémités au corps de la poussette de bébé lorsqu'on les utilise, et une paire de biellettes de support (33) reliées entre les parties pliables desdites biellettes de soutien (32) et lesdits tirants (18).

7. Nacelle selon la revendication 2, dans laquelle aussi bien la paroi avant (3) que la partie avant de la paroi de fond (2) sont flexibles et se plient pendant ladite rotation vers le bas.

8. Nacelle selon l'une quelconque des revendications précédentes, dans laquelle ladite paroi de fond (2) comprend des éléments de coeur durs séparés (7, 8, 9) incorporés dans ladite partie avant et dans ledit reste.

9. Nacelle selon l'une quelconque des revendications précédentes, dans laquelle une partie arrière dudit reste de la paroi de fond (2) est constituée de manière à pouvoir se soulever, ce qui définit un dossier.

FIG. 1

FIG. 2

FIG. 3

FIG. 4

3

FIG.5

## FIG.6

FIG. 7

FIG. 8

FIG.9

FIG. 10

FIG.11

FIG.12